# FASCICULE DE BREVET EUROPEEN

(11) **EP 0 581 645 B1**
(45) Date de publication et mention de la délivrance du brevet: **15.11.1995**
(21) Numéro de dépôt: 93401886.2
(22) Date de dépôt: 21.07.1993
(51) Int. Cl.: F24H 8/00

(54) **Chaudière équipée d'un échangeur massique et thermique à prise d'air auxiliaire**
Kessel mit Masse- und Wärmetauscher mit Nebenlufteinlass
Boiler having a mass and heat exchanger with an auxiliary air intake

(30) Priorité: 27.07.1992 FR 9209337
(43) Date de publication de la demande: 02.02.1994
(73) Titulaire: INSTITUT FRANCAIS DU PETROLE, 92502 Rueil-Malmaison (FR); SOCIETE D'ETUDE ET DE CONSTRUCTION DE CHAUDIERES EN ACIER SECCACIER, F-75015 Paris (FR)
(72) Inventeur: Brunel, Gérard, F-75015 Paris (FR); Grehier, Alain, F-75012 Paris (FR); Billy, Daniel, F-75014 Paris (FR); Rojey, Alexandre, F-92500 Rueil Malmaison (FR)

(56) Documents cités:
- FR-A- 2 446 460

## Description

La présente invention concerne une chaudière à échangeur massique et thermique, encore appelée chaudière à condensation, comprenant un foyer dont le brûleur est alimenté en air comburant ayant traversé I'échangeur massique et thermique, ce dernier étant par ailleurs traversé par les fumées en sortie de chaudière. Une telle chaudière est équipée d'un récupérateur de chaleur à condensation. En d'autres termes, la chaudière comporte un système de prélèvement de chaleur et d'eau sur les fumées, combiné à un système de réchauffage et d'humidification de l'air comburant à partir de cette chaleur et de cette eau prélevées sur les fumées.Il est à remarquer que cette chaudière comporte à la sortie du foyer et en amont de l'échangeur massique et thermique, I'échangeur habituel, pour transférer la chaleur fournie par la chaudière à un utilisateur tel qu'un circuit de chauffage ou une réserve d'eau chaude sanitaire.

La présente invention concerne plus particulièrement une chaudière équipée d'un échangeur massique et thermique comportant un chemin de fumées séparé du chemin de l'air comburant par une paroi d'échange poreuse, perméable à l'eau de condensation pour permettre, par le passage des condensats de fumées dans la veine d'air comburant et le refroidissement des fumées, d'humidifier et de réchauffer l'air comburant.

Une telle chaudière comporte de manière usuelle un foyer constituant la source de gaz chauds (fumées) alimentant un échangeur pour fournir la chaleur à l'utilisateur (circuit de chauffage central, installation de préparation d'eau sanitaire, etc).

En aval de cet échangeur se trouve un échangeur massique et thermique traversé par les fumées ainsi que par l'air comburant pour récupérer de l'énergie sous forme de chaleur et d'humidité sur les fumées et réchauffer et humidifier l'air comburant.

Il existe différents types de chaudières à condensation utilisant ce principe de récupération d'énergie. Certaines chaudières comportent un double circuit de circulation de liquide, l'un placé sur la sortie des fumées, l'autre sur l'entrée de l'air comburant, ces deux circuits échangeant les liquides d'humidification et de condensation qui servent en même temps de fluide caloporteur. De telles chaudières ont été décrites dans la demande de brevet FR-A-2446460 et dans la demande de brevet FR-A-2508616.

Ces chaudières à condensation à double circuit ont été simplifiées dans leur construction par la réunion des deux circuits en un seul échangeur dit massique et thermique. On peut citer à cet égard le brevet FR-B-2609413 ou son correspondant US-A-4873835. Cet échangeur est traversé par une ou plusieurs veines de fumées (gaz chaud et humide) ainsi que par une ou plusieurs veines d'air comburant (air frais et relativement sec). Les fumées et l'air comburant échangent la chaleur à travers des parois poreuses perméables à l'eau de condensation. Cette eau de condensation des fumées traverse les parois et humidifie l'air comburant. En fait, les condensats migrent à travers les parois poreuses sous l'effet de la capillarité tout en réalisant l'étanchéité des parois par rapport aux fumées et à l'air comburant circulant respectivement sur les deux faces d'une paroi poreuse.

Ces chaudières à échangeur massique et thermique sont avantageuses pour leur rendement et leur structure relativement simple.

De telles chaudières sont déjà connues sous de multiples forme de réalisation.

L'une des difficultés de telles chaudières est que, dans certaines conditions de fonctionnement, I'humidité de l'air comburant peut être trop forte au détriment de la teneur en oxygène qui peut chuter, dans les conditions les plus défavorables, par exemple jusqu'à environ 16 %, ce qui peut provoquer l'extinction de la flamme.

Le fonctionnement de telles chaudières connues est certes protégé puisque un détecteur de présence de flamme coupe l'alimentation du combustible et maintient la chaudière en arrêt de sécurité. A la remise en marche par un opérateur, les conditions de fonctionnement ne sont pas modifiées, puisque l'air comburant est toujours très humide et risque de provoquer une nouvelle fois l'extinction de la flamme. Dans de telles conditions, la chaudière ne pourra se remettre en marche qu'après un temps d'attente.

Dans le cadre des technologies existantes décrites dans l'art antérieur, ce problème est résolu en agissant sur le débit des pompes d'humidification ou des moyens d'aspersion.

Toutefois, dans le cadre des chaudières dont l'échangeur massique et thermique est constitué de parois poreuses, cette technologie n'est pas applicable du fait que les échanges de chaleur et d'eau s'effectuent sans pompes ni moyens d'aspersion.

La présente invention a pour but de remédier à ces inconvénients et concerne une chaudière à échangeur massique et thermique du type défini ci-dessus, caractérisée en ce qu'elle comporte une prise d'air auxiliaire, commandée, introduisant dans le foyer de chaudière de l'air n'ayant pas traversé l'échangeur massique et thermique.

Cette injection d'un air n'ayant pas traversé l'échangeur massique et thermique, c'est-à-dire d'air ambiant non chargé excessivement en humidité, permet de soutenir la flamme. Cette injection d'air n'est commandée qu'en cas de risque d'extinction de flamme de façon à ne by-passer l'échangeur massique et thermique que dans ces circonstances particulières.

Cet air extérieur est injecté directement dans la chaudière, de préférence au débouché de l'injecteur de gaz ou au voisinage d'un organe de surveillance de stabilité de flamme. On cherchera à injecter l'air en un point judicieusement choisi pour assurer le meilleur soutien de la flamme, par exemple à proximité directe de la naissance de la flamme.

L'ouverture de l'alimentation directe en air auxiliarie peut être commandée par un organe de détection de la qualité de la flamme, lorsque l'état de la flamme l'exige.

Ledit organe de détection peut être une sonde à ionisation, une cellule U.V, un thermocouple ou tout autre moyen équivalent.
De manière préférentielle, l'air injecté séparément est prélevé en aval de l'organe de régulation de l'alimentation en air et en amont de l'échangeur massique et thermique.
La présente invention sera décrite ci-après de manière plus détaillée à l'aide de deux modes de réalisation représentés schématiquement aux dessins annexés. Ainsi :
- la figure 1 est une vue schématique d'un premier mode de réalisation d'une chaudière selon l'invention.
- la figure 2 est un schéma d'un second mode de réalisation d'une chaudière selon l'invention.

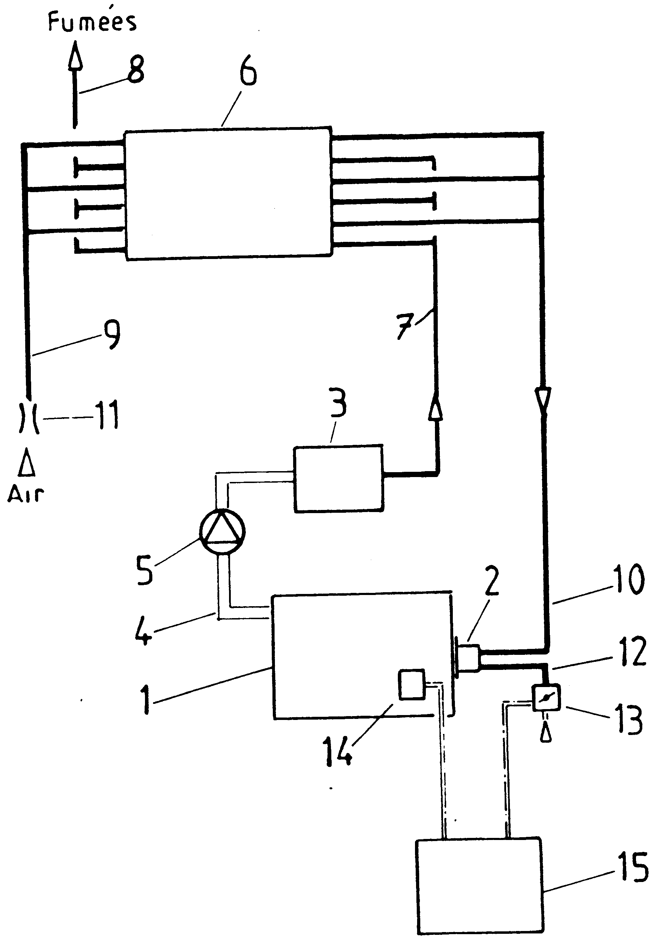

Selon la figure 1, la chaudière à échangeur massique et thermique, comprend un foyer 1 muni d'un brûleur 2. Le foyer fournit des fumées chaudes à un échangeur de chaleur 3 relié à l'utilisateur (circuit de chauffage central, réserve d'eau sanitaire,etc.). Cette liaison se fait par l'intermédiaire d'un conduit 4 équipé d'un ventilateur 5. En aval, l'échangeur 3 est relié à un échangeur massique et thermique 6 traversé par les fumées arrivant par la conduite 7 et sortant vers la cheminée 8, et par l'air comburant entrant par l'arrivée 9 et amené par la sortie 10 au brûleur 2. L'arrivée 9 d'air comburant est munie d'un organe de régulation de débit 11, qui permet de régler le débit d'air fourni au brûleur 2 en fonction de la combustion à réaliser, par exemple suivant la demande calorifique. Le foyer 1 est également muni d'une prise directe d'air 12 fournissant au foyer 1 de l'air n'ayant pas traversé l'échangeur massique et thermique 6. Cette prise directe d'air 12 est munie d'un organe d'ouverture ou de fermeture 13 permettant d'ouvrir ou de fermer la prise directe 12 et de régler son ouverture suivant les conditions de fonctionnement du foyer. Ces conditions de fonctionnement sont détectées par une sonde 14, par exemple une sonde à ionisation, contrôlant l'état de la flamme du brûleur 2 et fournissant un signal à un circuit de commande 15 relié notamment à l'organe d'ouverture ou de fermeture 13.

De manière plus détaillée, le détecteur de flamme 14, consistant en une sonde à ionisation et son circuit de commande 15, surveille l'état de la flamme et en cas de risque d'extinction, il commande par l'intermédiaire du circuit 15 et de l'organe d'ouverture ou de fermeture 13, la prise directe d'air 12. Cette prise directe d'air est représentée comme débouchant dans le brûleur 2. En fait, cette injection d'air par la prise directe 12 peut se faire au niveau de l'injection de gaz dans le brûleur ou au niveau de la sonde d'ionisation. Suivant l'endroit de l'injection, le signal fourni par la sonde sera différent, mais cette différence sera prise en compte par le circuit de commande 15, de sorte que l'emplacement de l'injection sera choisi au mieux suivant la structure du foyer 1 et du brûleur 2.

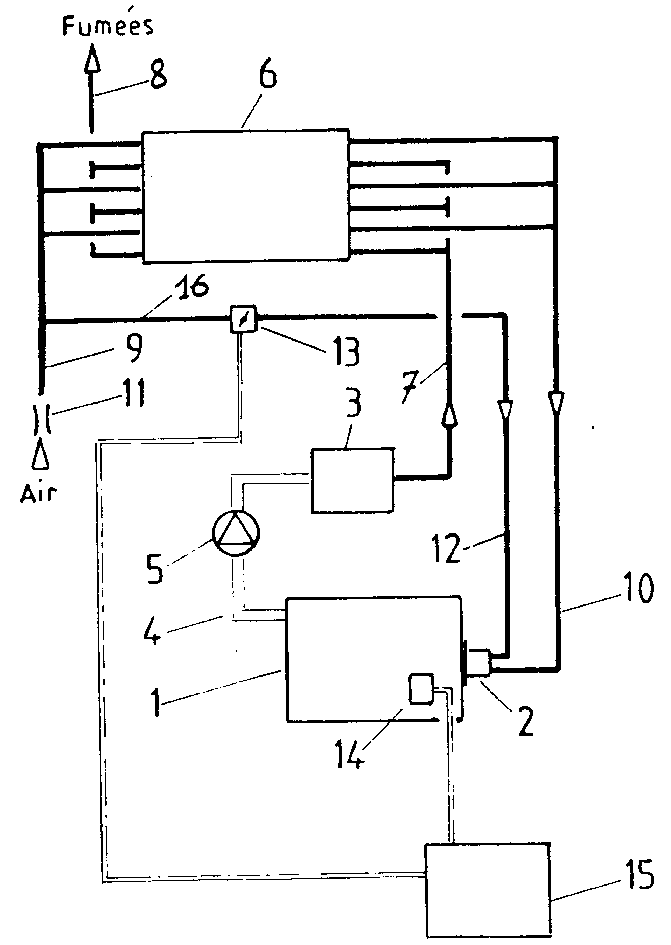

Le second mode de réalisation de l'invention, selon la figure 2, utilisera les mêmes références que le premier mode de réalisation, selon la figure 1, pour désigner les mêmes éléments.

A la différence du premier mode de réalisation, la prise d'air directe 12 est reliée par une conduite 16 munie de l'organe 13, à un point situé en aval de l'organe de régulation de débit d'air comburant 11 mais en amont de l'échangeur massique et thermique 6. Cette seconde solution facilite la régulation de la masse totale d'air fournie au foyer 1 puisque cette régulation se fait par l'organe 11, l'organe 13 ne constituant qu'un moyen de régulation complémentaire, prélevant une fraction de l'air comburant en dérivation de l'échangeur 6.

Dans une autre variante de l'installation de la figure 1, I'entrée d'air auxiliaire en 12 est assistée par un ventilateur auxiliaire. En effet, dans certains cas, l'action du ventilateur 5 peut être insuffisante ; de même, on peut imaginer que le ventilateur 5 soit installé de telle façon qu'il provoque une mise en pression du foyer empêchant ainsi l'entrée d'air en 12 (à titre d'exemple, ceci serait le cas si le ventilateur 5 était installé sur la conduite 9 ou sur la conduite 10).

## Revendications

1. Chaudière à échangeur massique et thermique comprenant un foyer (1) dont le brûleur (2) est alimenté en air comburant ayant traversé l'échangeur massique et thermique (6), ce dernier étant par ailleurs traversé par les fumées en sortie de chaudière, caractérisée en ce qu'elle comporte une prise d'air auxiliaire (12), introduisant dans le foyer (1) de chaudière de l'air n'ayant pas traversé l'échangeur massique et thermique (6).

2. Chaudière selon la revendication 1, caractérisée en ce la prise d'air (12) est commandée par un organe (13).

3. Chaudière selon la revendication 2, caractérisée en ce qu'elle comporte un dispositif de régulation d'alimentation d'air (11) en amont de l'échangeur masique et thermique (6) et une prise de dérivation (16) dont l'ouverture commandée par l'organe (13) alimente directement le foyer (1) de la chaudière sans passer par l'échangeur massique et thermique (6).

4. Chaudière selon l'une des revendications 1 à 3, caractérisée en ce que l'air est injecté directement à proximité de la naissance de la flamme.

5. Chaudière selon l'une des revendications 1 à 4, caractérisée en ce que l'alimentation en air auxiliaire est assuré par un ventilateur auxiliaire.

6. Chaudière selon l'une des revendications 1 à 5, caractérisée en ce que l'ouverture de l'organe (13) est commandé à partir d'un signal indicatif de qualité de flamme.

7. Chaudière selon l'une des revendications 1 à 6, caractérisée en ce que le chemin des fumées et le chemin de l'air dans l'échangeur massique et thermique sont séparés par des parois en matériaux poreux.

## Patentansprüche

1. Kessel mit Massen- und Wärmeaustauscher, der eine Vorkammer (1) umfaßt, deren Brenner (2) mit Luft zum Verbrennen versorgt wird, die den Massen- und Wärmeaustauscher durchströmt hat, wobei der letztere außerdem am Kesselausgang von den Abgasen durchströmt wird, dadurch gekennzeichnet, daß er eine Nebenansaugsteile (12) für Luft umfaßt, die in die Vorkammer (1) des Kessels Luft zuführt, die nicht den Massen- und Wärmeaustauscher (6) durchströmt hat.

2. Kessel nach Anspruch 1, dadurch gekennzeichnet, daß die Luftansaugstelle (12) von einer Vorrichtung (13) geregelt wird.

3. Kessel nach Anspruch 2, dadurch gekennzeichnet, daß er eine Vorrichtung (11) zur Regelung der Luftzufuhr stromaufwärts vom Massen- und Wärmeaustauscher (6) und eine umgehende Ansaugstelle (16) umfaßt, deren Öffnung von der Vorrichtung (13) geregelt wird, die direkt die Vorkammer (1) des Kessels versorgt, ohne den Massen- und Wärmeaustauscher (6) zu durchströmen.

4. Kessel nach einem der Ansprüche 1 bis 3, dadurch gekennzeichnet, daß die Luft direkt neben dem Anfangspunkt der Flamme zugeführt wird.

5. Kessel nach einem der Ansprüche 1 bis 4, dadurch gekennzeichnet, daß die Versorgung mit Nebenluft durch ein Hilfsgebläse sichergestellt wird.

6. Kessel nach einem der Ansprüche 1 bis 5, dadurch gekennzeichnet, daß die Öffnung der Vorrichtung (13) aufgrund eines Signals geregelt wird, das die Qualität der Flamme anzeigt.

7. Kessel nach einem der Ansprüche 1 bis 6, dadurch gekennzeichnet, daß der Kanal für die Abgase und der Kanal für die Luftzufuhr in dem Massen- und Wärmeaustauscher durch Wände aus porösem Material getrennt sind.

## Claims

1. A heat and mass exchange boiler comprising a furnace (1) with a burner (2) which is supplied with oxidising air which has traversed the heat and mass exchanger (6), the latter also being traversed by fumes leaving the boiler, characterised in that it comprises a controlled auxiliary air intake (12) which introduces air into the boiler furnace (1) which has not traversed the heat and mass exchanger (6).

2. A boiler according to claim 1, characterised in that the air intake (12) is actuated by a means (13).

3. A boiler according to claim 2, characterised in that it comprises an air intake regulation means (11) upstream of the heat and mass exchanger (6) and a by-pass (16), whose opening is controlled by means (13), directly supplies the boiler furnace (1) without traversing the heat and mass exchanger (6).

4. A boiler according to any one of claims 1 to 3, characterised in that the air is injected directly in the proximity of the base of the flame.

5. A boiler according to any one of claims 1 to 4, characterised in that the auxiliary air intake is ensured by an auxiliary ventilator.

6. A boiler according to any one of claims 1 to 5, characterised in that opening of the means (13) is controlled by a signal indicating the quality of the flame.

7. A boiler according to any one of claims 1 to 6, characterised in that the path for fumes and the path for air in the heat and mass exchanger are separated by walls of a porous material.
